# EUROPÄISCHE PATENTSCHRIFT

(11) **EP 2 933 469 B1**
(45) Veröffentlichungstag und Bekanntmachung des Hinweises auf die Patenterteilung: **16.09.2020**
(21) Anmeldenummer: 15001125.2
(22) Anmeldetag: 17.04.2015
(51) Int. Cl.: F02K 9/40, F02K 9/64

(54) **VERFAHREN UND VORRICHTUNG ZUR HERSTELLUNG EINER HOCHEMISSIVEN OBERFLÄCHENSTRUKTUR EINER STRAHLUNGSGEKÜHLTEN BRENNKAMMER**
METHOD AND DEVICE FOR PRODUCING A HIGHLY EMISSIVE SURFACE STRUCTURE OF A RADIATION COOLED COMBUSTION CHAMBER
PROCÉDÉ ET DISPOSITIF DE PRODUCTION D'UNE STRUCTURE DE SURFACE À HAUT POUVOIR ÉMISSIF D'UNE CHAMBRE DE COMBUSTION REFROIDIE PAR RAYONNEMENT

(30) Priorität: 17.04.2014 DE 102014005648
(43) Veröffentlichungstag der Anmeldung: 21.10.2015
(73) Patentinhaber: ArianeGroup GmbH, 82024 Taufkirchen (DE)
(72) Erfinder: Kraus, Stephan, D-74229 Oedheim (DE); Hartmann, Gerhard, D-83123 Amerang (DE); Riehle, Martin, D-74196 Neuenstadt (DE); Caesar, Christoph, D-81667 München (DE)
(74) Vertreter: Schicker, Silvia

(56) Entgegenhaltungen:
- DE-A1- 3 811 613
- US-A1- 2002 063 223

## Beschreibung

Die Erfindung betrifft ein Verfahren und eine Vorrichtung zur Herstellung einer Oberflächenstruktur einer strahlungsgekühlten Brennkammer eines Raketentriebwerks. Ferner betrifft die Erfindung eine strahlungsgekühlte Brennkammer eines Raketentriebwerks.

Strahlungskühlung ist bei Raketentriebwerken für den Betrieb im luftleeren Raum, wie z.B. bei Lageregelungs- oder Orbitaltriebwerken, die bevorzugte Kühlungsart. Gegenüber der Regenerativkühlung bestehen die Vorteile darin, dass keine komplizierten, hohlen Wandstrukturen mit Kühlkanälen benötigt werden. Ferner treten keine Leistungsverluste, z.B. durch den Antrieb von Kühlmittelpumpen, auf. Aus Festigkeitsgründen muss die Temperatur der Triebwerkswände deutlich unterhalb ihrer Schmelztemperatur gehalten werden. Durch die Verwendung hochschmelzender und korrosionsfester Materialien sind dann hohe Triebwerksleistungen, verbunden mit hohen Wärmestromdichten, möglich. Solche Materialien, wie z.B. Platin, besitzen jedoch eine sehr niedrige Emissionszahl, wodurch sich eine nicht ausreichende Strahlungskühlung ergeben kann.

Bei strahlungsgekühlten Brennkammern von Orbitaltriebwerken ist die durch Strahlung abführbare Menge bei konstanter Temperatur linear vom integralen Emissionsvermögen abhängig. Die Emissionszahl liegt bei blanken Metallen zwischen 0,1 und 0,3. Um die Strahlungskühlung zu verbessern, muss das Emissionsvermögen, d.h. der integrale Emissionsgrad, erhöht werden.

Das Aufbringen von die Wärmeabstrahlung verbessernden Schichten, z.B. metallische Oxide, Karbide, Boride oder Nitride, bringt jedoch eine Reihe von Problemen mit sich. Die Beschichtung kann durch mechanische Fremdeinwirkung oder unterschiedliche thermische Ausdehnungskoeffizienten, gepaart mit einer großen Anzahl an Thermalzyklen abplatzen. Je nach Ausgangsmaterial der Brennkammer besteht auch die Gefahr einer Legierungsbildung mit dem Beschichtungswerkstoff. Hierdurch können sich beispielsweise niedrigschmelzender Eutektika oder spröde intermetallische Phasen bilden, was grundsätzlich vermieden werden soll.

Das Dokument DE 38 11 613 A1 offenbart eine Oberflächenstruktur zur Verbesserung der Wärmeabfuhr eines Triebwerks, wobei Nuten in eine Bauteiloberfläche jeweils senkrecht zur Triebwerksachse eingearbeitet werden. Zur weiteren Verbesserung der Wärmeabfuhr wird außerdem geraten, die Nutdichte zwischen Düsenhals, Einspritzkopf und Düsenaustritt zu variieren.

Das Dokument US 2002/0063223 A1 offenbart die Möglichkeit zur Herstellung von Nuten mittels eines gepulsten, optisch gepumpten Festkörperlasers.

Es ist Aufgabe der vorliegenden Erfindung, ein Verfahren und eine Vorrichtung zur Herstellung einer Oberflächenstruktur einer strahlungsgekühlten Brennkammer eines Orbitaltriebwerks bereitzustellen, welche die Wärmeabfuhr einer strahlungsgekühlten Brennkammer verbessern ohne die mechanischen Eigenschaften der Brennkammer in negativer Weise zu beeinflussen. Eine weitere Aufgabe der Erfindung besteht darin, eine strahlungsgekühlte Brennkammer mit verbessertem Emissionsvermögen anzugeben.

Diese Aufgaben werden gelöst durch ein Verfahren gemäß den Merkmalen des Patentanspruchs 1, eine Vorrichtung gemäß den Merkmalen des Patentanspruchs 8 und eine Brennkammer gemäß den Merkmalen des Patentanspruchs 9. Vorteilhafte Ausgestaltungen ergeben sich aus den abhängigen Patentansprüchen.

Gemäß einem ersten Aspekt wird ein Verfahren zur Herstellung einer Oberflächenstruktur einer strahlungsgekühlten Brennkammer eines Orbitaltriebwerks vorgeschlagen. Bei dem Verfahren erfolgt eine Strukturierung der radial nach außen gewandten Brennkammeroberfläche mit einem Laser, speziell einem gepulsten, optisch gepumpten Festkörperlaser, insbesondere einem gepulsten, optisch gepumpten Yb:fibre-Festkörperlaser, wobei als Strukturierung ein Muster aus einer Vielzahl von einzelnen Vertiefungen erzeugt wird.

Unter Verwendung eines gepulsten, optisch gepumpten Festkörperlasers kann eine Strukturierung der Brennkammeroberfläche ohne deren Oxidation erreicht werden. Die Vertiefungen wirken aufgrund ihrer Geometrie thermo-optisch als Hohlraumstrah ler, so dass der effektive Emissionsgrad der Brennkammeroberfläche, abhängig von den Abmessungen der Vertiefungen, deutlich gegenüber der Emissionszahl einer unbehandelten Brennkammer erhöht ist. Während bei einer unbehandelten Brennkammer mit einer glatten, metallisch blanken Oberfläche die Emissionszahl ca. 0,1 bis 0,3 beträgt, weist eine erfindungsgemäß erzeugte Oberflächenstruktur eine Emissionszahl von bis zu 0,8 bis 0,9 auf.

Die Erzeugung der Oberflächenstruktur durch einen Laser stellt sicher, dass keine chemische oder metallurgische Inkompatibilität des Grundmaterials mit dem Beschichtungswerkstoff entsteht. Dies ist besonders vorteilhaft, wenn als Grundmaterial für die Brennkammer Platin oder Legierungen aus Platingruppenmetallen oder Legierungen und Verbundsysteme aus Platingruppenmetallen mit hochschmelzenden Refraktärmetallen eingesetzt werden.

Durch das Verfahren erfolgt keine Einbettung von Fremdmaterial in das Grundmaterial der Brennkammer. Im Gegensatz zum Aufbringen einer Beschichtung auf das Grundmaterial der Brennkammer, welche unter ungünstigen Umständen abplatzen kann, ergibt sich mit der vorgeschlagenen Oberflächenstruktur kein Verlust der Wirksamkeit über die Lebensdauer. Der Herstellaufwand ist gering. Insbesondere sind kein Plasmaprozess und keine Vakuumanwendung erforderlich. Im Gegensatz zu einem thermischen Spritzen oder Sandstrahlen zur Erzeugung einer Oberflächenstruktur erfolgt keine mechanische Lasteinbringung auf die Brennkammer, so dass das Herstellverfahren die mechanischen Eigenschaften der Brennkammer nicht oder nur geringfügig beeinflusst.

Die Strukturierung kann vollständig oder auch nur bereichsweise erfolgen. Zum Beispiel können kleine, kreisförmige Flächen von der Strukturierung ausgelassen werden, welche dann für Punktschweißverbindungen genutzt werden können. Dadurch können z.B. Thermoelemente aufgebracht werden, welche für eine Bodentestinstrumentierung für Abnahmetests dienen.

Zur Erzeugung einer jeweiligen Vertiefung wird der Festkörperlaser relativ zu der Brennkammeroberfläche angeordnet und/oder ausgerichtet. Dadurch wird sichergestellt, dass der Abstand und die Ausrichtung zwischen einer Austrittsöffnung des Lasers und der Brennkammeroberfläche immer gleich ist. Mit anderen Worten liegt dann die Brennkammeroberfläche immer in der gleichen Fokusebene des Lasers. Hierdurch ist sichergestellt, dass gleichförmige Vertiefungen erzeugt werden.

Der Festkörperlaser und/oder die Brennkammer werden in Axialrichtung der Brennkammer und/oder in einer bestimmten Radialrichtung der Brennkammer gegeneinander verschoben. Hierdurch ist es möglich, der Kontur der Brennkammer des Orbitaltriebwerks zu folgen und während der Erzeugung der Vertiefungen bei der Erzeugung jeder einzelner Vertiefungen den gleichen Abstand sicherzustellen. Mit Hilfe des erfindungsgemäßen Verfahrens wird eine Rasterung der Oberflächenvertiefungen nach einem Verfahren nach dem Stand der Technik erzeugt.

Der zwischen dem Festkörperlaser und der Brennkammer eingenommene Winkel wird zur Herstellung einer jeweiligen Vertiefung verändert, wobei der Winkel zwischen einer Rotationsachse der Brennkammer und einer die Rotationsachse kreuzenden Strahlachse des Festkörperlasers eingenommen ist. Dies ermöglicht zur Erzeugung einer jeweiligen Vertiefung eine relativ gleiche Ausrichtung des Lasers relativ zu der Brennkammer, unabhängig davon, ob ein zylindrischer oder ein konischer Abschnitt der Brennkammer mit den Vertiefungen versehen werden soll.

Gemäß einer weiteren Ausgestaltung ist die Brennkammer zur Erzeugung der Vertiefungen in einer Haltevorrichtung eingespannt, welche durch einen Schrittmotor die Brennkammer nach Erzeugung einer jeweiligen Vertiefung um einen vorgegebenen Winkel um die Rotationsachse dreht. Dadurch können sequentiell Vertiefungen in Umfangsrichtung in der Brennkammeroberfläche der rotationssymmetrischen Brennkammer erzeugt werden.

Die Brennkammer kann um eine Anzahl n um den vorgegebenen Winkel verdreht werden, wobei das Produkt aus der Anzahl n und dem Winkel 360° ergibt. Anschließend kann die Verschiebung des Festkörperlasers und/oder der Brennkammer in Axialrichtung der Brennkammer und/oder in einer bestimmten Radialrichtung der Brennkammer gegeneinander erfolgen. Die Erzeugung der Oberflächenstruktur erfolgt gemäß dieser Ausgestaltung dadurch, dass sequentiell Vertiefungen in Umfangsrichtung in der Brennkammeroberfläche erzeugt werden. Anschließend erfolgt eine axiale Verschiebung von Laser und Brennkammer zueinander, um beabstandet zu dem gerade erzeugten "Ring" mit Vertiefungen einen weiteren Ring in entsprechender Weise zu erzeugen. Es ist zweckmäßig, wenn eine Verschiebung in Axialrichtung um etwa 50 µm erfolgt.

Gemäß einer weiteren Ausgestaltung kann mit jeder Verschiebung der Abstand zwischen einer Austrittsöffnung des Lasers und der Brehnkammeroberfläche auf einen gleichen Wert eingestellt werden. Alternativ oder zusätzlich kann mit jeder Verschiebung der Winkel zwischen der Austrittsöffnung des Lasers und der Brennkammeroberfläche auf einen gleichen Wert eingestellt werden. Dies stellt sicher, dass gleichförmige Vertiefungen zur Herstellung der Oberflächenstruktur erzeugt werden können.

Gemäß einer weiteren Ausgestaltung erfolgt die Verschiebung des Festkörperlasers und/oder der Brennkammer unter Steuerung eines Rechners, der dazu eine Information über die Geometrie der Brennkammeroberfläche umfasst. Hierdurch ist über die gesamte Oberfläche der Brennkammer eine gleichmäßige Erzeugung der Oberflächenstruktur möglich.

Gemäß einem zweiten Aspekt wird eine Vorrichtung zur Herstellung einer Oberflächenstruktur einer strahlungsgekühlten Brennkammer eines Orbitaltriebwerks vorgeschlagen. Diese umfasst einen gepulsten, optisch gepumpten Festkörperlaser. Als Laser kann beispielsweise ein Yb:fibre-Festkörperlaser zum Einsatz kommen. Die Vorrichtung umfasst eine Haltevorrichtung zum Einspannen der zu bearbeitenden Brennkammer, wobei die Haltevorrichtung einen Schrittmotor umfasst, durch den die Brennkammer nach Erzeugung einer jeweiligen Vertiefung durch den Festkörperlaser um einen vorgegebenen Winkel um die Rotationsachse drehbar ist. Die Vorrichtung umfasst schließlich einen Rechner zum Steuern der Anordnung und/oder der Ausrichtung des Festkörperlasers relativ zu der Brennkammeroberfläche vor der Erzeugung einer jeweiligen Vertiefung.

Die Vorrichtung kann weitere Mittel zur Durchführung des oben beschriebenen Verfahrens umfassen.

Gemäß einem dritten Aspekt wird eine strahlungsgekühlte Brennkammer eines Raketentriebwerks vorgeschlagen, die auf ihrer nach außen gewandten Brennkammeroberfläche eine Strukturierung aufweist, die durch ein Muster aus einer Vielzahl von einzelnen Vertiefungen gebildet ist.

Eine solche Brennkammer weist gegenüber einer glatten, metallischen blanken Oberfläche eine sehr viel größere Emissionszahl mit Werten von bis zu 0,8 bis 0,9 auf. Dadurch ist die Strahlungskühlung verbessert.

Das Verhältnis L/D von Tiefe = Länge (L) einer Vertiefung zum Durchmesser D dieser Vertiefung ergibt für Werte zwischen ca. 1 und 10 eine deutliche Verbesserung der Emissionszahl. L/D ist somit das Länge zu Durchmesserverhältnis einer Vertiefung z.B. bei einer angenommenen zylinderförmigen Vertiefung das Tiefezu Durchmesserverhältnis. Ein sinnvolles L/D hängt stark von den Emissionseigenschaften des unbeeinflussten Grundmaterials ab.

Die Vielzahl von Vertiefungen kann regelmäßig über die Brennkammeroberfläche angeordnet sein. Insbesondere kann die Strukturierung über einen Teil der Brennkammeroberfläche oder über die gesamte Brennkammeroberfläche vorgesehen sein.

Die Brennkammer kann rotationssymmetrisch ausgebildet sein. Die Vertiefungen verlaufen in der Brennkammeroberfläche in Umfangsrichtung. Wenn von einem Verlauf in Umfangsrichtung die Rede ist, so ist dies so zu verstehen, dass die auf einem Umfangsring angeordneten Vertiefungen in einer Ebene senkrecht zur Rotationsachse gelegen sind. Gemäß einer weiteren Ausgestaltung können zwei in longitudinale Richtung beabstandete Vertiefungen einen Abstand von etwa 50 µm - 200 µm aufweisen.

Die Vertiefungen weisen bezüglich der Brennkammeroberfläche eine im Wesentlichen radiale Ausrichtung auf. Dies ergibt sich aus der Erzeugung der Vertiefungen, bei der sichergestellt wird, dass der Laserstrahl in vorgegebenem Abstand senkrecht auf die Oberfläche der Brennkammer auftrifft. Bezüglich der Brennkammeroberfläche ist die Erstreckungsrichtung sämtlicher Vertiefungen damit gleichförmig.

Die Erfindung wird nachfolgend näher anhand eines Ausführungsbeispiels in der Zeichnung erläutert. Es zeigen:
- Fig. 1: eine schematische Darstellung einer Vorrichtung zur Herstellung einer Oberflächenstruktur einer strahlungsgekühlten Brennkammer eines Orbitaltriebwerks,
- Fig. 2: eine grafische Darstellung der Oberflächenabtastung mit einem 3DLaserscanning-Mikroskop einer durch ein erfindungsgemäßes Verfahren erzeugten Oberflächenstruktur, und
- Fig. 3: einen Schnitt bzw. einen Schliff einer erfindungsgemäß hergestellten Oberflächenstruktur einer strahlungsgekühlten Brennkammer.

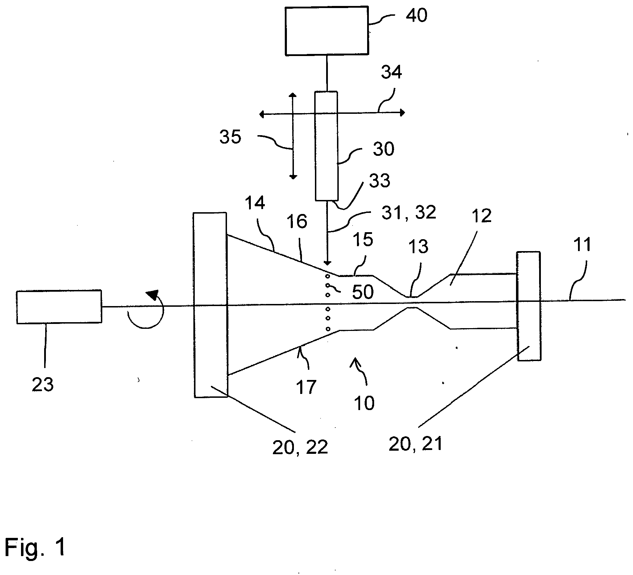

Fig. 1 zeigt eine Vorrichtung zur Herstellung einer Oberflächenstruktur einer strahlungsgekühlten Brennkammer 10. Die rotationssymmetrisch ausgebildete Brennkammer 10 weist eine mit 11 bezeichnete Rotationsachse auf. In bekannter Weise besteht die Brennkammer 10 aus einem Einspritzsegment 12, einem Düsenhals 13 und einem Düsenaustrittssegment 14. Das Düsenaustrittssegment 14 umfasst einen zylinderförmigen Abschnitt 15 und einen sich konisch in Richtung des Düsenaustritts erweiternden konischen Abschnitt 16. Das Einspritzsegment 12, der Düsenhals 13 und das Düsenaustrittssegment 14 bilden zusammen eine Brennkammeroberfläche 17 aus, deren abschnittsweise sich in Richtung der Rotationsachse 11 und schräg dazu verlaufende Oberflächenkontur in der seitlichen Darstellung von Fig. 1 gut ersichtlich ist.

Die Brennkammer 10 ist zur Herstellung der nachfolgend näher beschriebenen Oberflächenstruktur in eine Haltevorrichtung 20 eingespannt. Die Haltevorrichtung 20 umfasst ein erstes und ein zweites Spannelement 21, 22. Dabei trägt bzw. hält das erste Spannelement 21 beispielhaft das Einspritzsegment 12, das zweite Spannelement 22 grenzt an das Düsenaustrittssegment 14. Die Haltevorrichtung 20 umfasst einen Schrittmotor 23, durch den die Brennkammer 10 mit Hilfe der Spannelemente 21, 22 um die Rotationsachse 11 drehbar ist. Die Haltevorrichtung kann nach Art einer Drehmaschine ausgebildet sein.

Die Vorrichtung umfasst ferner einen Laser 30. Der Laser 30 ist ein gepulster, optisch gepumpter Festkörperlaser, z.B. ein Yb:fibre-Festkörperlaser. Der Laser 30 ist relativ zu der in der Haltevorrichtung 20 eingespannten Brennkammer 10 derart angeordnet, dass ein in einer Strahlachse 32 aus dem Laser 30 austretender Laserstrahl 31 bzgl. der Rotationsachse 11 radial in Richtung der Brennkammer 10 gerichtet ist.

Im vorliegenden Ausführungsbeispiel ist der Laser 30 durch eine nicht näher gezeigte Vorrichtung, wie z.B. einen Roboterarm, unter Steuerung eines Rechners 40 entlang einer ersten Bewegungsachse 34 und einer zweiten Bewegungsachse 35 verschiebbar. Die erste Bewegungsachse 34 ermöglicht eine Verschiebung des Lasers 30 parallel zur Rotationsachse, d.h. in Axialrichtung. Eine Bewegung des Lasers 30 entlang der zweiten Bewegungsachse 35 entspricht einer Verschiebung in Radialrichtung. Zusätzlich kann der Laser 30 durch die nicht näher gezeigte Vorrichtung in ihrem Winkel in Bezug auf die Brennkammer verändert werden, wobei der Winkel zwischen der Rotationsachse 11 der Brennkammer und der die Rotationsachse 11 kreuzenden Strahlachse 32 des Lasers eingenommen ist.

Mittels des Lasers 30 erfolgt eine Strukturierung der radial nach außen gewandten Brennkammeroberfläche 17. Als Strukturierung wird dabei ein bestimmtes, vorzugsweise regelmäßiges, Muster aus einer Vielzahl von einzelnen Vertiefungen erzeugt. Exemplarisch ist in Fig. 1 eine Anzahl an Vertiefungen 50 dargestellt, welche in der Brennkammeroberfläche 17 des konischen Abschnitts 16 in Umfangsrichtung verlaufen. Diese bilden einen Ring an Vertiefungen aus.

Die Vertiefungen 50 wirken aufgrund ihrer Geometrie thermo-optisch als Hohlraumstrahler, so dass der effektive Emissionsgrad der vollständig mit den Vertiefungen 50 versehenen Brennkammeroberfläche erhöht werden kann. Abhängig von den Abmessungen der Vertiefungen 50 sind gegenüber einer glatten, metallisch blanken Oberfläche effektive Werte von bis zu 0,8 bis 0,9 möglich. Eine glatte, metallisch blanke Oberfläche erreicht demgegenüber lediglich eine Emissionszahl von 0,1 bis 0,3.

Wie dem Fachmann bekannt ist und der schematischen Darstellung der Fig. 1 ohne weiteres entnehmbar ist, ist die Brennkammer 10 ein zweifach gekrümmtes rotationssymmetrisches Bauteil. Zur Herstellung einer vollflächig gleichmäßigen Strukturierung mittels der Vertiefungen ist vorgesehen, den Abstand zwischen der Laseraustrittsöffnung 33 und der Brennkammeroberfläche 17 immer gleich zu halten. Dadurch liegt die Bauteiloberfläche immer in der Fokusebene des Lasers 30. Die Laseraustrittsöffnung 33 und die Brennkammer 10 werden dazu axial und vertikal entsprechend des Konturverlaufs durch die nicht gezeigte Vorrichtung (z.B. Roboterarm) gegeneinander verschoben. Dies erfolgt im vorliegenden Ausführungsbeispiel durch eine Bewegung des Lasers 30.

Für einen Fachmann ist jedoch ohne weiteres ersichtlich, dass anstelle der Bewegung des Lasers 30 auch die die Brennkammer 10 einspannende Haltevorrichtung 20 beweglich bzw. verschiebbar ausgebildet werden könnte. In einer weiteren alternativen Ausgestaltung können sowohl der Laser 30 als auch die Haltevorrichtung 20 bewegbar ausgebildet sein.

Die relative Bewegung von Laser 30 und Haltevorrichtung 20 zueinander umfasst nicht nur eine axiale und vertikale Verschiebung, gegebenenfalls wird auch der Winkel des Lasers 30 relativ zu der Brennkammer 10 angepasst, wie bereits beschrieben.

Zur Erzeugung der Oberflächenstrukturierung wird der Abstand zwischen dem Laser 30 und dem Ziel auf der Brennkammeroberfläche 17 der in der Haltevorrichtung 20 eingespannten Brennkammer 10 justiert. Anschließend wird die erste Vertiefung 50 hergestellt. Im nächsten Schritt wird die Brennkammer 10 um einen vorgegebenen Winkel gedreht und die nächste Vertiefung 50 hergestellt. Dies wird solange wiederholt, bis die Laseraustrittsöffnung 33 wieder auf die erste Vertiefung 50 zeigt. Mit anderen Worten wird die Brennkammer 10 um eine Anzahl n um den vorgegebenen Winkel verdreht bis das Produkt aus der Anzahl n und dem vorgegebenen Winkel 360° ergibt.

In einem nächsten Schritt wird (im vorliegenden Ausführungsbeispiel) der Laser 30 axial bewegt. Die axiale Bewegung beträgt etwa 50 µm. Der Abstand wird gegebenenfalls neu justiert und die nächste Umfangs-Serie von Vertiefungen 50 erzeugt. Eine Neujustage des Abstands ist beispielsweise erforderlich, wenn von einem zylinderförmigen Abschnitt in einen konischen Abschnitt übergegangen wird.

Durch die Vielzahl an derart erzeugten Vertiefungen entsteht die gewünschte Oberflächenstruktur, welche z.B. aus einer Vielzahl an in Umfangsrichtung verlaufenden Vertiefungen (Ringen) besteht.

Die Erzeugung der Vertiefungen 50 erfolgt unter Steuerung des Rechners 40. Hierzu steht dem Rechner 40 die äußere Geometrie der Brennkammer 10 zur Verfügung. Alternativ oder zusätzlich kann über geeignete Sensoren (in Fig. 1 nicht dargestellt) der Abstand bzw. Fokus eingestellt und konstant gehalten werden.

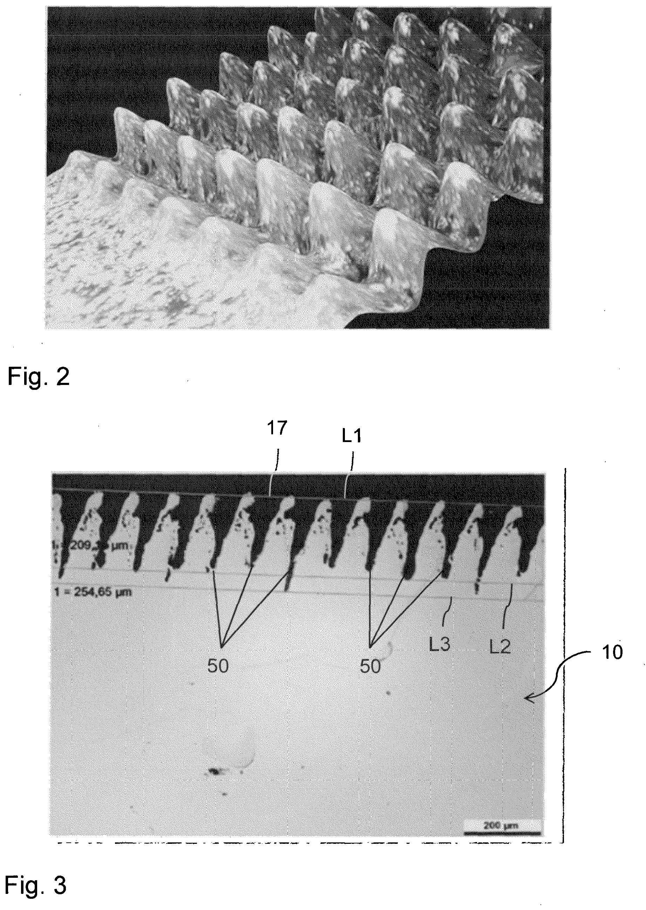

Fig. 2 zeigt eine Aufnahme einer Oberflächenabtastung einer mit einer erfindungsgemäßen erzeugten Oberflächenstruktur versehenen Brennkammer. Die Oberflächenstruktur erscheint als eine regelmäßige Abfolge von Bergen und Tälern. Die Täler entsprechen dabei den vorstehenden erzeugten Vertiefungen.

Fig. 3 zeigt einen Schliff einer mikrostrukturierten Probe, wobei das Grundmaterial aus Platin bzw. einer Platinlegierung besteht. Jede Vertiefung 50 ist durch einen Laserpuls erzeugt, der das nun fehlende Material verdampft hat. Aus der Schnittdarstellung ist gut ersichtlich, dass die Vertiefungen im Wesentlichen gleichförmig ausgebildet sind. Zusätzlich sind drei von links nach rechts verlaufende Hilfslinien L1, L2, L3 dargestellt, wobei die oberste Hilfslinie L1 die Brennkammeroberfläche 17, die mittlere Hilfslinie L2 Vertiefungen mit einer geringen Tiefe und die unterste Hilfslinie L3 Vertiefungen mit einer größeren Tiefe einhüllt.

### BEZUGSZEICHENLISTE

- 10: Brennkammer
- 11: Rotationsachse
- 12: Einspritzsegment
- 13: Düsenhals
- 14: Düsenaustrittssegment
- 15: zylinderförmiger Abschnitt
- 16: konischer Abschnitt
- 17: Brennkammeroberfläche (allg: Bauteiloberfläche)
- 20: Haltevorrichtung
- 21: erstes Spannelement
- 22: zweites Spannelement
- 23: Motor
- 30: Laser
- 31: Laserstrahl
- 32: Strahlachse
- 33: Laseraustrittsöffnung
- 34: erste Bewegungsachse (Verschiebung in Axialrichtung)
- 35: zweite Bewegungsachse (Verschiebung in Radialrichtung)
- 40: Rechner
- 50: Vertiefung
- L1: Hilfslinie
- L2: Hilfslinie
- L3: Hilfslinie

## Patentansprüche

1. Verfahren zur Herstellung einer Oberflächenstruktur einer strahlungsgekühlten Brennkammer (10) eines Raketentriebwerks, bei dem
eine Strukturierung der radial nach außen gewandten Brennkammeroberfläche (17) erfolgt, wobei als Strukturierung ein Muster aus einer Vielzahl von einzelnen Vertiefungen erzeugt wird,
**dadurch gekennzeichnet, dass**
die Strukturierung mit einem gepulsten, optisch gepumpten Festkörperlaser (30) erfolgt, wobei
der Festkörperlaser (30) und/oder die Brennkammer (10) in Axialrichtung der Brennkammer (10) und/oder in einer bestimmten Radialrichtung der Brennkammer (10) gegeneinander verschoben werden, und
der zwischen dem Festkörperlaser (30) und der Brennkammer (10) eingenommene Winkel zur Herstellung der Vertiefungen verändert wird, wobei der Winkel zwischen einer Rotationsachse (11) der Brennkammer (10) und einer die Rotationsachse (11) kreuzenden Strahlachse (32) des Festkörperlasers (30) eingenommen ist.

2. Verfahren nach Anspruch 1, bei dem zur Erzeugung einer jeweiligen Vertiefung der Festkörperlaser (30) relativ zu der Brennkammeroberfläche angeordnet und/oder ausgerichtet wird.

3. Verfahren nach einem der vorhergehenden Ansprüche, bei dem die Brennkammer (10) zur Erzeugung der Vertiefungen in einer Haltevorrichtung (20) eingespannt ist, welche durch einen Schrittmotor (23) die Brennkammer (10) nach Erzeugung einer jeweiligen Vertiefung um einen vorgegebenen Winkel um die Rotationsachse (11) dreht.

4. Verfahren nach Anspruch 3, bei dem die Brennkammer (10) um eine Anzahl n um den vorgegebenen Winkel verdreht wird, wobei das Produkt aus der Anzahl n und dem Winkel 360° ergibt und wobei dann die Verschiebung des Festkörperlasers (30) und/oder der Brennkammer (10) in Axialrichtung der Brennkammer (10) und/oder in einer bestimmten Radialrichtung der Brennkammer (10) gegeneinander erfolgt.

5. Verfahren nach Anspruch 4, bei dem eine Verschiebung in Axialrichtung um etwa 50 µm erfolgt.

6. Verfahren nach einem der vorhergehenden Ansprüche, bei dem mit jeder Verschiebung der Abstand und/oder der Winkel zwischen einer Austrittsöffnung des Lasers (30) und der Brennkammeroberfläche (17) auf einen gleichen Wert eingestellt wird.

7. Verfahren nach einem der vorhergehenden Ansprüche, bei dem die Verschiebung des Festkörperlasers (30) und/oder der Brennkammer (10) unter Steuerung eines Rechners (40) erfolgt, der dazu eine Information über die Geometrie der Brennkammeroberfläche (17) umfasst.

8. Vorrichtung zur Herstellung einer Oberflächenstruktur einer strahlungsgekühlten Brennkammer (10) eines Orbitaltriebwerks, umfassend:
eine Haltevorrichtung (20) zum Einspannen der zu bearbeitenden Brennkammer (10),
**gekennzeichnet durch**
einen gepulsten, optisch gepumpten Festkörperlaser (30); und
einen Rechner (40) zum Steuern der Anordnung und/oder der Ausrichtung des Festkörperlasers (30) relativ zu der Brennkammeroberfläche (17) vor der Erzeugung einer jeweiligen Vertiefung, wobei der Festkörperlaser (30) und/oder die Brennkammer (10) in Axialrichtung der Brennkammer (10) und/oder in einer bestimmten Radialrichtung der Brennkammer (10) gegeneinander verschiebbar sind; sowie **dadurch, dass**
die Haltevorrichtung (20) einen Schrittmotor (23) umfasst, durch den die Brennkammer (10) nach Erzeugung einer jeweiligen Vertiefung durch den Festkörperlaser (30) um einen vorgegebenen Winkel um die Rotationsachse (11) drehbar ist, und
der zwischen dem Festkörperlaser (30) und der Brennkammer (10) eingenommene Winkel zur Herstellung der Vertiefungen veränderbar ist, wobei der Winkel zwischen der Rotationsachse (11) der Brennkammer (10) und einer die Rotationsachse (11) kreuzenden Strahlachse (32) des Festkörperlasers (30) eingenommen ist.

9. Strahlungsgekühlte Brennkammer (10) eines Raketentriebwerks, die ein Düsenaustrittssegment (14) mit einem zylinderförmigen Abschnitt (15) und einem sich konisch in Richtung eines Düsenaustritts erweiternden konischen Abschnitt (16) umfasst und die auf ihrer radial nach außen gewandten Brennkammeroberfläche (17) eine Strukturierung aufweist, die durch ein Muster aus einer Vielzahl von einzelnen Vertiefungen gebildet ist,
**dadurch gekennzeichnet, dass**
die Vertiefungen, die in der Brennkammeroberfläche (17) des konischen Abschnitts in Umfangsrichtung verlaufen, mit einem senkrecht auf die Brennkammeroberfläche (17) auftreffenden Laserstrahl erzeugt sind, so dass bezüglich der Brennkammeroberfläche (17) die Erstreckungsrichtung sämtlicher Vertiefungen gleichförmig ist.

10. Brennkammer (10) nach Anspruch 9, bei der das Verhältnis (L/D) von Länge (L) einer Vertiefung zum Durchmesser (D) dieser Vertiefung deutlich größer als 1 ist.

11. Brennkammer (10) nach Anspruch 9 oder 10, bei der die Vielzahl von Vertiefungen regelmäßig über die Brennkammeroberfläche (17) angeordnet ist.

12. Brennkammer (10) nach einem der Ansprüche 9 bis 11, bei der die Strukturierung über einen Teil der Brennkammeroberfläche oder über die gesamte Brennkammeroberfläche (17) vorgesehen ist.

13. Brennkammer (10) nach einem der Ansprüche 9 bis 12, bei der die Brennkammer (10) rotationssymmetrisch ausgebildet ist.

## Claims

1. Method for producing a surface structure of a radiation-cooled combustion chamber (10) of a rocket engine, wherein
a structuring of the combustion chamber surface (17) facing radially outwards is effected, a pattern consisting of a plurality of individual depressions being produced as the structuring,
**characterised in that**
the structuring is effected with a pulsed, optically pumped solid-state laser (30), wherein
the solid-state laser (30) and/or the combustion chamber (10) are displaced relative to one another in the axial direction of the combustion chamber (10) and/or in a specific radial direction of the combustion chamber (10), and the angle assumed between the solid-state laser (30) and the combustion chamber (10) is changed to produce the depressions, the angle being assumed between an axis of rotation (11) of the combustion chamber (10) and a beam axis (32) of the solid-state laser (30) crossing the axis of rotation (11).

2. Method according to claim 1, wherein, in order to produce a respective depression, the solid-state laser (30) is arranged and/or aligned relative to the combustion chamber surface.

3. Method according to one of the preceding claims, wherein the combustion chamber (10), for producing the depressions, is clamped in a holding device (20), which by means of a step motor (23) rotates the combustion chamber (10) by a predetermined angle about the axis of rotation (11) after producing a respective depression.

4. Method according to claim 3, wherein the combustion chamber (10) is rotated by a number n by the predetermined angle, the product of the number n and the angle being 360°, and the displacement of the solid-state laser (30) and/or the combustion chamber (10) then taking place in the axial direction of the combustion chamber (10) and/or in a specific radial direction of the combustion chamber (10) relative to one another.

5. Method according to claim 4, wherein a displacement in the axial direction of about 50 µm takes place.

6. Method according to one of the preceding claims, wherein with each displacement the distance and/or the angle between an exit opening of the laser (30) and the combustion chamber surface (17) is adjusted to an equal value.

7. Method according to one of the preceding claims, wherein the displacement of the solid-state laser (30) and/or of the combustion chamber (10) is effected under the control of a computer (40), which for this purpose comprises information on the geometry of the combustion chamber surface (17).

8. Apparatus for producing a surface structure of a radiation-cooled combustion chamber (10) of an orbital engine, comprising:
a holding device (20) for clamping the combustion chamber (10) to be processed,
**characterised by**
a pulsed, optically pumped solid-state laser (30); and
a computer (40) for controlling the arrangement and/or the alignment of the solid-state laser (30) relative to the combustion chamber surface (17) prior to the production of a respective depression, wherein the solid-state laser (30) and/or the combustion chamber (10) are displaceable relative to one another in the axial direction of the combustion chamber (10) and/or in a specific radial direction of the combustion chamber (10); and in that the holding device (20) comprises a step motor (23) by means of which the combustion chamber (10) is rotatable by a predetermined angle about the axis of rotation (11) after a respective depression has been produced by the solid-state laser (30), and
the angle assumed between the solid-state laser (30) and the combustion chamber (10) is variable for producing the depressions, wherein the angle is assumed between the axis of rotation (11) of the combustion chamber (10) and a beam axis (32) of the solid-state laser (30) crossing the axis of rotation (11).

9. Radiation cooled combustion chamber (10) of a rocket engine, comprising a nozzle outlet segment (14) with a cylindrical portion (15) and a conical portion (16) widening conically in the direction of a nozzle outlet, and having on its radially outwardly facing combustion chamber surface (17) a structuring formed by a pattern of a plurality of individual depressions,
**characterised in that**
the depressions, which extend in the combustion chamber surface (17) of the conical portion (16) in the circumferential direction, are produced with a laser beam impinging perpendicularly on the combustion chamber surface (17), so that the direction of extension of all depressions is uniform with respect to the combustion chamber surface (17).

10. Combustion chamber (10) according to claim 9, wherein the ratio (L/D) of a length (L) of a depression to a diameter (D) of this depression is significantly greater than 1.

11. Combustion chamber (10) according to claim 9 or 10, wherein the plurality of depressions is regularly arranged over the combustion chamber surface (17).

12. Combustion chamber (10) according to one of claims 9 to 11, wherein the structuring is provided over a part of the combustion chamber surface or over the entire combustion chamber surface (17)

13. Combustion chamber (10) according to one of claims 9 to 12, wherein the combustion chamber (10) is rotationally symmetrical.

## Revendications

1. Procédé pour réaliser une structure de surface d'une chambre de combustion (10) refroidie par rayonnement d'un moteur de fusée, dans lequel
une structuration de la surface de chambre de combustion (17) tournée radialement vers l'extérieur est effectuée, un motif constitué d'une pluralité de dépressions individuelles étant produit en tant que structuration,
**caractérisé en ce que**
la structuration est effectuée à l'aide d'un laser à solide pulsé pompé optiquement (30), dans lequel
le laser à solide (30) et/ou la chambre de combustion (10) sont déplacés l'un par rapport à l'autre dans la direction axiale de la chambre de combustion (10) et/ou dans une direction radiale déterminée de la chambre de combustion (10), et
l'angle adopté entre le laser à solide (30) et la chambre de combustion (10) pour réaliser les dépressions est modifié, l'angle étant adopté entre un axe de rotation (11) de la chambre de combustion (10) et un axe de faisceau (32) du laser à solide (30) croisant l'axe de rotation (11).

2. Procédé selon la revendication 1, dans lequel, pour produire une dépression respective, le laser à solide (30) est disposé et/ou orienté par rapport à la surface de chambre de combustion.

3. Procédé selon l'une des revendications précédentes, dans lequel, pour produire les dépressions, la chambre de combustion (10) est serrée dans un dispositif de maintien (20) qui fait tourner la chambre de combustion (10) autour de l'axe de rotation (11) d'un angle prédéfini au moyen d'un moteur pas à pas (23) après qu'une dépression respective a été produite.

4. Procédé selon la revendication 3, dans lequel la chambre de combustion (10) est tournée d'un nombre n de l'angle prédéfini, le produit du nombre n et de l'angle étant de 360°, et le déplacement du laser à solide (30) et/ou de la chambre de combustion (10) l'un par rapport à l'autre étant ensuite effectué dans la direction axiale de la chambre de combustion (10) et/ou dans une direction radiale déterminée de la chambre de combustion (10).

5. Procédé selon la revendication 4, dans lequel on effectue un déplacement d'environ 50 µm dans la direction axiale.

6. Procédé selon l'une des revendications précédentes, dans lequel, à chaque déplacement, la distance et/ou l'angle entre une ouverture de sortie du laser (30) et la surface de chambre de combustion (17) est réglé(e) à une valeur égale.

7. Procédé selon l'une des revendications précédentes, dans lequel le déplacement du laser à solide (30) et/ou de la chambre de combustion (10) est effectué sous la commande d'un ordinateur (40) qui comprend à cet effet une information sur la géométrie de la surface de chambre de combustion (17).

8. Dispositif pour réaliser une structure de surface d'une chambre de combustion (10) refroidie par rayonnement d'un moteur orbital, comprenant :
un dispositif de maintien (20) pour serrer la chambre de combustion (10) à usiner,
**caractérisé par**
un laser à solide pulsé pompé optiquement (30) ; et
un ordinateur (40) pour commander la disposition et/ou l'orientation du laser à solide (30) par rapport à la surface de chambre de combustion (17) avant la production d'une dépression respective, le laser à solide (30) et/ou la chambre de combustion (10) pouvant être déplacés l'un par rapport à l'autre dans la direction axiale de la chambre de combustion (10) et/ou dans une direction radiale déterminée de la chambre de combustion (10) ; et en ce que
le dispositif de maintien (20) comprend un moteur pas à pas (23) au moyen duquel on peut faire tourner la chambre de combustion (10) d'un angle prédéfini autour de l'axe de rotation (11) après qu'une dépression respective a été produite par le laser à solide (30), et
l'angle adopté entre le laser à solide (30) et la chambre de combustion (10) pour réaliser les dépressions est modifiable, l'angle étant adopté entre l'axe de rotation (11) de la chambre de combustion (10) et un axe de faisceau (32) du laser à solide (30) croisant l'axe de rotation (11).

9. Chambre de combustion (10) refroidie par rayonnement d'un moteur de fusée, qui comprend un segment de sortie de tuyère (14) avec une partie cylindrique (15) et une partie conique (16) s'élargissant de manière conique en direction d'une sortie de tuyère, et qui présente sur sa surface de chambre de combustion (17) tournée radialement vers l'extérieur une structuration qui est formée par un motif constitué d'une pluralité de dépressions individuelles,
**caractérisée en ce que**
les dépressions s'étendant dans la direction circonférentielle dans la surface de chambre de combustion (17) de la partie conique (16) sont produites avec un rayon laser atteignant perpendiculairement la surface de chambre de combustion (17), de sorte que la direction d'extension de toutes les dépressions par rapport à la surface de chambre de combustion (17) est la même.

10. Chambre de combustion (10) selon la revendication 9, dans laquelle le rapport (L/D) de la longueur (L) d'une dépression sur le diamètre (D) de cette dépression est nettement supérieur à 1.

11. Chambre de combustion (10) selon la revendication 9 ou 10, dans laquelle la pluralité de dépressions est régulièrement disposée sur la surface de chambre de combustion (17).

12. Chambre de combustion (10) selon l'une des revendications 9 à 11, dans laquelle la structuration est prévue sur une partie de la surface de chambre de combustion ou sur la totalité de la surface de chambre de combustion (17).

13. Chambre de combustion (10) selon l'une des revendications 9 à 12, laquelle chambre de combustion (10) est conçue symétrique en rotation.
